# EUROPEAN PATENT SPECIFICATION

(11) **EP 0 747 584 B1**
(45) Date of publication and mention of the grant of the patent: **14.10.1998**
(21) Application number: 96107258.4
(22) Date of filing: 08.05.1996
(51) Int. Cl.: F02B 27/02

(54) **An inlet manifold with variable length ducts**
Lufteinlassleitung mit variabelen Rohrlängen
Collecteur d'admission avec des conduits à longueur variable

(30) Priority: 09.06.1995 IT TO950481
(43) Date of publication of application: 11.12.1996
(73) Proprietor: FIAT AUTO S.p.A., 10135 Torino (IT)
(72) Inventor: Roffina, Giovanni, 10090 Cuceglio (TO) (IT); Giardina, Papa Paolo, 10050 San Giorio di Susa (TO) (IT)
(74) Representative: Di Francesco, Gianni

(56) References cited:
- EP-A- 0 492 122
- DE-A- 3 820 674
- DE-A- 4 102 453
- DE-A- 4 137 704
- PATENT ABSTRACTS OF JAPAN vol. 9, no. 139 (M-387) [1862] , 14 July 1985 & JP-A-60 019914 (NISSAN), 1 February 1985,

## Description

The present invention relates to an inlet manifold for an internal combustion engine, of the kind comprising at least one distribution box connected to the head of the engine by means of a single, short duct for each cylinder, wherein each duct can be extended to provide higher torque at low speed.

EP-A-0 492 122 discloses an internal combustion engine having several cylinders in which the air inlet device provides at least one inlet manifold composed of an outwardly open distribution box connected to the various cylinders through air supply ducts extending from the head of the engine to an outer wall of said box. Mounted within such an inlet manifold are curved ducts which are free to rotate about a shaft to contact said wall where the single inlet ducts end. This results in an extension of each of said ducts, with an aim to increase the engine torque at low speed. When it is desired to have shorter inlet ducts to gain more power at high speed, above a given threshold the curved ducts rotate to a second position non contacting the outer wall of the inlet manifold, whereby the inlet ducts regain their initial length.

Although this kind of inlet manifold is simple, of low cost and takes up little space, it has the drawback that when the curved ducts are lifted up outwardly, turbulence occurs within the inlet air when it is desired to have more power, thereby compromising correct operation of the manifold.

Particularly, the air coming in from the outside expands in the whole distribution box and also passes between the curved ducts before it can enter the inlet ducts in the short arrangement. As apparent, contrasting flows are formed which disturb the inlet zone of the single air inlet ducts.

In addition, the above arrangement requires a volume, within the distribution box, that does not take part in the inlet flow of air and causes prolonged response time to throttle operation.

It is an object of the present invention to provide an inlet manifold capable of overcoming the above prior art drawbacks.

In accordance with the invention, the above object is accomplished by the provision of an inlet manifold as claimed in claim 1.

In order that the present invention may be well understood there will now be described a few preferred embodiments thereof, given by way of example, reference being made to the accompanying drawings, in which:

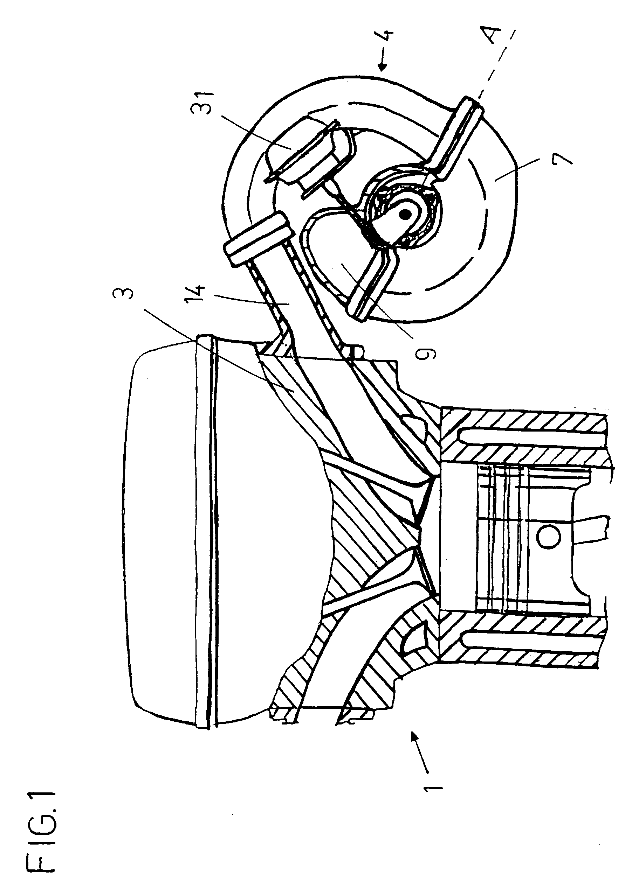

- FIG. 1: is a partial section view of an internal combustion engine fitted with an inlet manifold according to the present invention;
- FIG. 2: is a partial section view of the inlet manifold of FIG. 1 with a movable part in a first position;
- FIG. 3: is a section view of the inlet manifold of FIG. 1 where the movable part is in a second position;
- FIG. 4: is a plan view of the movable part of the inlet manifold of FIG. 1 for a five cylinder engine; and

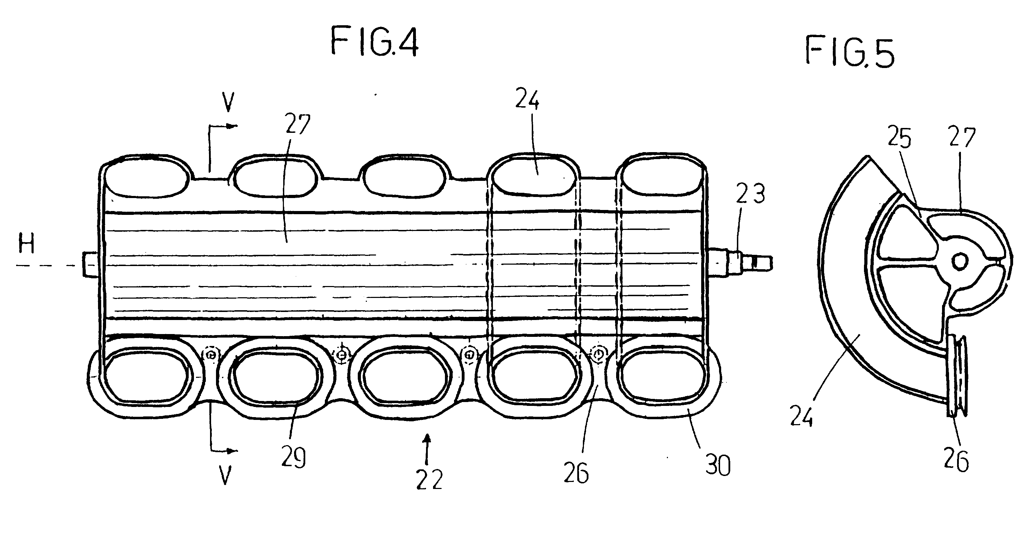

- FIG. 5: is a section view of the movable part taken along line V-V of FIG. 4.

Referring to the drawings, numeral 1 designates overall an i.c. engine having one or more cylinders with a head 3 connected to an inlet manifold 4.

Said inlet manifold is composed of a distribution box 6 formed by first and second half-shells 6 and 7. Half-shells 6 and 7 are removably joined along a parting plane A. A first inlet chamber 9 is formed in the second half-shell 8 and communicates with the outside through an air filter (not shown).

A number of inlet ducts 10, one for each cylinder of the engine, are formed in the second half-shell 8. Inlet ducts 10 are connectable to the head of the engine by a flange 11. The inlet ducts 10 extending from a planar wall 12 of second half-shell 8 defined by the separation plane A can be obtained, as in the illustrated embodiment, in two parts 13, 14 connected therebetween by flanges 15.

The first half-shell 7 provides a semi-cylindrical cavity 20 connected with inlet chamber 9. Within cavity 20, a semi-cylindrical body 22 is free to rotate about the longitudinal axis H of cavity 20 by means of a shaft 23 mounted on the half-shell. Body 22 is composed of an assembly of curved duct portions 24, the number of which corresponds to the number of inlet ducts 10. Curved duct portions 24 are supported by a structure 25 which keeps them together and forms a substantially planar wall 26 from which an end portion 29 of said curved duct portions 24 extends. Wall 26 is surrounded by a sealing gasket 30 of elastomeric material.

Structure 25 has a semi-circular protrusion 27 in the region of shaft 23. In use, protrusion 27 is housed within a hollow 28 having a substantially corresponding shape, which extends around the longitudinal axis of the second half-shell 8, between the planar wall 12 and the opening of the inlet chamber 9 communicating with semicircular chamber 20.

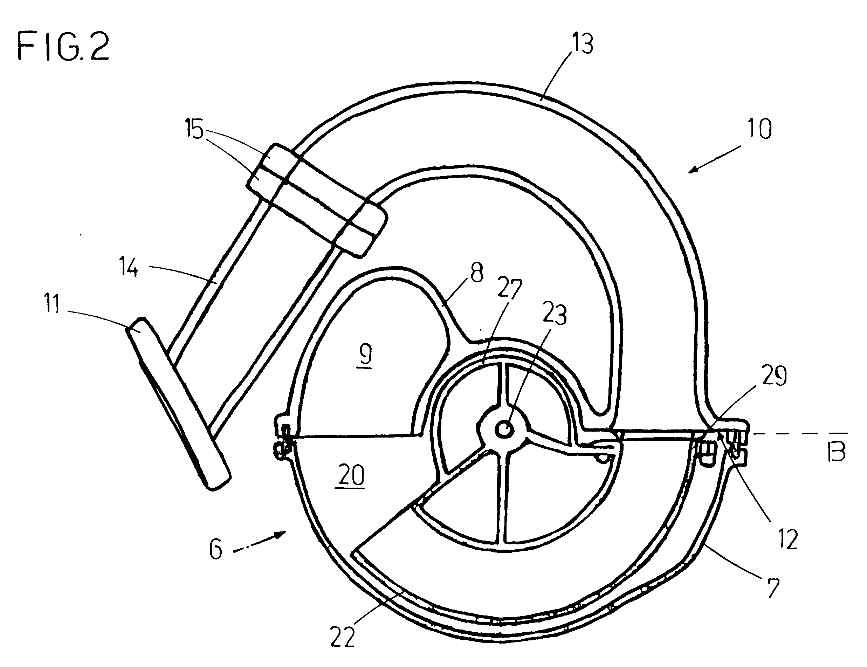

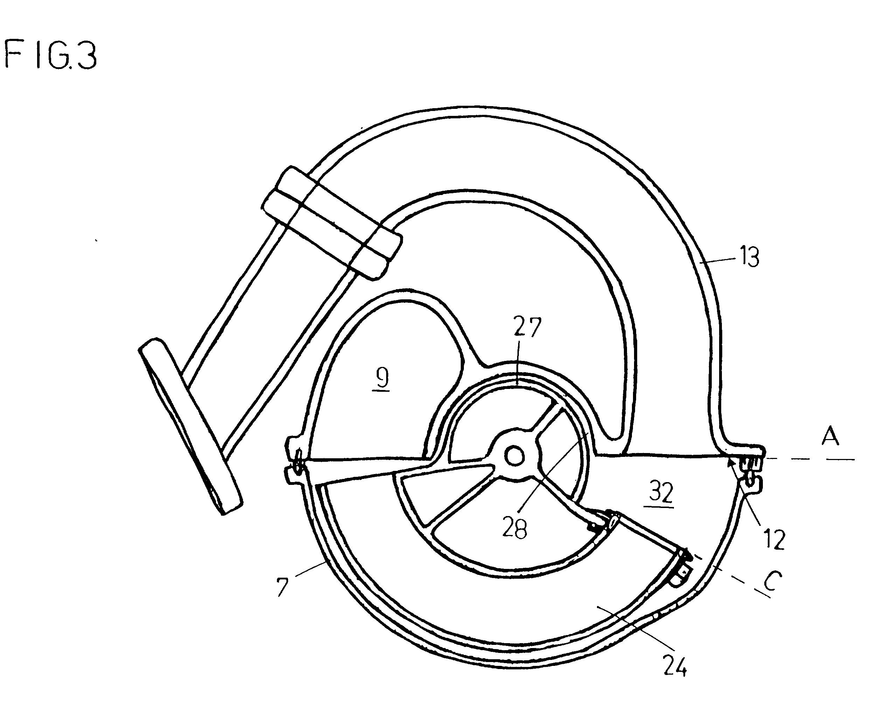

The body 22 is free to rotate, driven by an actuator 31 between a first position B depicted in FIG. 2 and a second position shown in FIG. 3. In the first position of FIG. 2, the curved duct portions have their ends 29 resting against planar wall 12 of the second half-shell 8 through gaskets 30, each of said curved duct portions corresponding to one of the inlet ducts 10. In the second position C of FIG. 3, body 22 is rotated so that the ends 29 are spaced apart from said planar wall 12. In the present embodiment, actuator 31 is of pneumatic, it being understood that an actuator of other types may be used.

In the second position C, a second inlet chamber 32 is formed between planar wall 12 of second half-shell 8 and wall 26 of body 22. Chamber 32 defines a whole, continuous volume and communicates with chamber 9 and with the outside through the curved duct portions 24.

Operation of the inlet manifold of the present invention is as follows.

At low revs, or low load, the body 22 is rotated in its first position B with the ends 29 of curved duct portions 24 contacting the wall 12 through gasket 30. In this way, the length of the fixed inlet manifolds 10 adds to the length of the movable portions 24, which results in the engine having a good drive.

When the engine exceeds a certain threshold speed, for example 4000-4200 r.p.m., the actuator rotates body 22 in the second position C. In this position, the chamber 32 which is formed interrupts the continuity of the inlet ducts. The short duct arrangement of position C takes the place of the long duct arrangement of position B, which results in increasing the engine power.

In addition, there is an advantage over prior art in that the air coming into chamber 32 is free of turbulence as, owing also to the protrusion 27 surrounding shaft 23 and inserted in cavity 28 having a corresponding outline, the air arrives in chamber 32 mainly through curved duct portions 24 the walls of which are expressly constructed for this purpose.

A further advantage with respect to prior art arrangements concerns the inner volume of the inlet manifold. Due to the provision of said semi-cylindrical protrusion 27, the inner volume is considerably reduced, thereby improving response times following throttle operation.

## Claims

1. An inlet manifold (4) for an internal combustion engine (1) having one or more cylinders, the inlet manifold consisting of a number of fixed inlet ducts extending from said cylinders to a distribution box (6) defined by first and second half-shells (7,8) joined along a parting plane (A), the distribution box (6) communicating with the outside through an inlet chamber (9) obtained in said second half shell (8); said fixed inlet ducts (10) being adapted for co-operating with movable duct portions (24) located within said distribution box, said movable duct portions being movable between a first position (B) contacting said fixed inlet ducts (10) to form a single long duct communicating with said inlet chamber, and a second position (C) in which the movable duct portions do not contact the fixed ducts (10), wherein in said second position (C) the movable duct portions (24) define a second inlet chamber (32) with said fixed ducts (10), characterised in that said second chamber (32) being in communication with the first chamber (9) mainly through said movable duct portions (24).

2. An inlet manifold according to claim 1, characterised in that a semi-circular cavity (28) is provided in the second half-shell (8) along the longitudinal axis thereof, said cavity (28) being arranged between said inlet chamber (9) open towards the parting plane (A) of the half-shells (7, 8) and said fixed ducts (10).

3. An inlet manifold according to claims 1 and 2, characterised in that the fixed ducts (10) terminate in a wall (12) of the second half-shell (8) defined by the parting plane (A).

4. An inlet manifold according to claim 1, characterised in that the first half-shell (7) provides a semi-cylindrical cavity (20) open towards said parting plane (A).

5. An inlet manifold according to claims 1 and 4, characterised in that a semi-cylindrical body (22) adapted to keep said movable duct portions (24) together is rotatably mounted in said cavity (20) by a shaft (23) coaxial to the longitudinal axis of the second half-shell (8).

6. An inlet manifold according to claims 1 and 5, characterised in that said semi-cylindrical body (22) defines a wall (26) from which an end of said movable ducts (24) extends.

7. An inlet manifold according to claims 1, 3 and 6, characterised in that said second inlet chamber (32) is defined in the first half-shell (7) between the wall (12) of the second half-shell (8) and the wall (26) of the semi-cylindrical body (22).

8. An inlet manifold according to claims 1, 2 and 5, characterised in that said semi-cylindrical body (22) provides a semi-cylindrical protrusion (27) surrounding said shaft (23), said protrusion being adapted to fit within said cavity (28) having a corresponding contour.

## Patentansprüche

1. Ansaugkrümmer (4) für einen Verbrennungsmotor (1) mit einem oder mehreren Zylindern, bestehend aus einer Anzahl an festen Ansaugleitungen, welche sich von den Zylindern zu einem aus ersten (8) und zweiten (8), entlang einer Trennebene (A) miteinander verbundenen Halbschalen bestehenden Verteilerkasten (6) erstrecken. wobei der Verteilerkasten (6) mit der Umgebung über eine Einlaßkammer (9) verbunden ist, welche in der zweiten Halbschale (8) gebildet ist; wobei die festen Ansaugleitungen (10) zum Zusammenwirken mit innerhalb des Verteilerkastens angeordneten beweglichen Leitungsabschnitten (24) angepaßt sind, wobei die beweglichen Leitungsabschnitte zwischen einer ersten Position (B), in welcher sie die festen Ansaugleitungen (10) berühren, um eine einzige lange Leitung zu bilden, welche mit der Ansaugkammer verbunden ist, und einer zweiten Position (C), in welcher die beweglichen Leitungsabschnitten die festen Leitungen (10) nicht berühren und die beweglichen Leitungsabschnitte (24) eine zweite Ansaugkammer (32) mit den festen Leitungen (10) definieren, beweglich angeordnet sind,
dadurch gekennzeichnet,
daß die zweite Kammer (32) mit der ersten Kammer (9) im wesentlichen durch die beweglichen Leitungsabschnitte (24) verbunden ist.

2. Ansaugkrümmer gemäß Anspruch 1,
dadurch gekennzeichnet,
daß in der zweiten Halbschale (8) entlang deren Längsachse ein halbkreisförmiger Hohlraum (28) vorgesehen ist, der zwischen der zur Trennebene (A) der Halbschalen (7, 8) hin offenen Ansaugkammer (9) und den festen Leitungen (10) angeordnet ist.

3. Ansaugkrümmer gemäß Ansprüchen 1 und 2,
dadurch gekennzeichnet,
daß die festen Leitungen (10) in einer durch die Trennebene (A) definierten Wand (12) der zweiten Halbschale (8) enden.

4. Ansaugkrümmer gemäß Anspruch 1,
dadurch gekennzeichnet,
daß die erste Halbschale (7) einen halbkreisförmigen, zur Trennebene (A) offenen Hohlraum (20) bildet.

5. Ansaugkrümmer gemäß Ansprüchen 1 und 4,
dadurch gekennzeichnet,
daß ein halbkreisförmiger Körper (22), welcher dazu geschaffen ist, die beweglichen Leitungsabschnitte (24) zusammenzuhalten, in dem Hohlraum (20) über eine zur Längsachse der zweiten Halbschale (8) koaxial gelagerte Welle (23) drehbar montiert ist.

6. Ansaugkrümmer gemäß Ansprüchen 1 und 5,
dadurch gekennzeichnet,
daß der halbkreisförmige Körper (22) eine Wand (26) definiert, von welcher sich ein Ende der beweglichen Leitungen (24) erstreckt.

7. Ansaugkrümmer gemäß Ansprüchen 1, 3 und 6,
dadurch gekennzeichnet,
daß die zweite Ansaugkammer (32) in der ersten Halbschale (7) zwischen der Wand (12) der zweiten Halbschale (8) und der Wand (26) des halbkreisförmigen Körpers (22) definiert ist.

8. Ansaugkrümmer gemäß Ansprüchen 1, 2 und 5,
dadurch gekennzeichnet,
daß der halbkreisförmige Körper (22) eine die Welle (23) umgebende halbkreisförmige Auskragung (27) bildet, welche in den eine entsprechende Kontur aufweisenden Hohlraum (28) hineinpaßt.

## Revendications

1. Tubulure d'admission (4) pour un moteur à combustion interne (1) ayant un ou plusieurs cylindres, la tubulure d'admission consistant en un certain nombre de conduits fixes d'admission s'étendant depuis lesdits cylindres, jusqu'à un distributeur (6) défini par des première et seconde demi-coquilles (7,8) juxtaposées selon un plan de séparation (A), le distributeur (6) communiquant avec l'extérieur par une chambre d'admission (9) agencée dans ladite seconde demi-coquille (8) ; lesdits conduits fixes d'admission (10) étant agencés pour coopérer avec des portions de conduit mobiles (24) disposées à l'intérieur dudit distributeur, lesdites portions de conduit mobiles étant déplaçables entre une première position (B) de contact avec les conduits fixes d'admission (10), pour former un conduit unique allongé de communication avec ladite chambre d'admission, et une seconde position (C) dans laquelle les portions de conduit mobiles ne sont pas au contact des conduits fixes (10), avec un agencement tel que, dans ladite deuxième position (C), les portions de conduit mobiles (24) définissent avec lesdits conduits fixes (10) une seconde chambre d'admission (32), caractérisée en ce que ladite seconde chambre (32) est en communication avec la première chambre (9) principalement par l'intermédiaire desdites portions de conduit mobiles (24).

2. Tubulure d'admission selon la revendication 1, caractérisée en ce qu'une cavité demi-circulaire (28) est prévue dans la seconde demi-coquille (8) en s'étendant le long de l'axe longitudinal de celle-ci, ladite cavité (28) étant disposée entre ladite chambre d'admission (9) ouverte en direction du plan de séparation (A) des demi-coquilles (7,8), et lesdits conduits fixes (10).

3. Tubulure d'admission selon les revendications 1 et 2, caractérisée en ce que les conduits fixes (10) se terminent en une paroi (12) de la seconde demi-coquille (8) définie par le plan de séparation (A).

4. Tubulure d'admission selon la revendication 1, caractérisée en ce que la première demi-coquille (7) présente une cavité hémicylindrique (20) ouverte en direction du plan de séparation (A).

5. Tubulure d'admission selon les revendications 1 et 4, caractérisée en ce qu'un corps hémicylindrique (22) agencé pour maintenir ensemble lesdites portions de conduit mobiles (24) est monté tournant dans ladite cavité (20) au moyen d'un arbre (23) coaxial à l'axe longitudinal de ladite seconde demi-coquille (8).

6. Tubulure d'admission selon les revendications 1 et 5, caractérisée en ce que ledit corps hémicylindrique (22) définit une paroi (26) à partir de laquelle s'étend une extrémité desdits conduits mobiles (24).

7. Tubulure d'admission selon les revendications 1, 3 et 6, caractérisée en ce que ladite seconde chambre d'admission (32) est formée dans la première demi-coquille (7), entre la paroi (12) de la seconde demi-coquille (8) et la paroi (26) du corps hémicylindrique (22).

8. Tubulure d'admission selon les revendications 1, 2 et 5, caractérisée en ce que ledit corps hémicylindrique (22) présente une protubérance hémicylindrique (27) entourant ledit arbre (23), ladite protubérance étant agencée pour venir se loger dans ladite cavité (28),, laquelle présente un profil correspondant.
